(19) Europäisches Patentamt
European Patent Office
Office européen des brevets

(11) **EP 4 394 916 A1**

(12) **EUROPEAN PATENT APPLICATION**
published in accordance with Art. 153(4) EPC

(43) Date of publication:
**03.07.2024 Bulletin 2024/27**

(21) Application number: **21964369.9**

(22) Date of filing: **18.11.2021**

(51) International Patent Classification (IPC):
**H01M 4/131** (2010.01)      **H01M 10/056** (2010.01)

(52) Cooperative Patent Classification (CPC):
Y02E 60/10

(86) International application number:
**PCT/CN2021/131471**

(87) International publication number:
**WO 2023/087209 (25.05.2023 Gazette 2023/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• XU, Chunrui
  **Ningde, Fujian 352100 (CN)**
• ZHOU, Shaoyun
  **Ningde, Fujian 352100 (CN)**

(74) Representative: **Icosa
83 avenue Denfert-Rochereau
75014 Paris (FR)**

(54) **ELECTROCHEMICAL DEVICE AND ELECTRONIC DEVICE**

(57) This application relates to an electrochemical device and an electronic device. An electrochemical device according to this application includes a positive electrode, a negative electrode, a separator, and an electrolytic solution. The electrolytic solution includes a lithium salt, an organic solvent, and an additive. A normal-temperature conductivity of the electrolytic solution is b mS/cm, a single-side coating weight of one positive electrode plate is a g/1540.25 mm$^2$, and a relationship between a and b satisfies: $b \geq 50.859a^2 - 16.044a + 8.2071$, where $0.2 \leq a \leq 0.55$. The electrochemical device is improved with respect to long-term cycle performance and high-temperature storage performance, and maintains excellent charge performance and energy efficiency.

EP 4 394 916 A1

## Description

### TECHNICAL FIELD

This application relates to the field of energy storage, and in particular, to an electrochemical device and an electronic device.

### BACKGROUND

Currently, lithium-ion batteries have been widely used in the fields such as electric vehicles, consumer electronic products, and energy storage devices, and have gradually become mainstream batteries in such fields by virtue of advantages such as a high energy density and no memory effect. Especially, the electric vehicle, micro-power, and energy storage industries have been on track for rapid growth, offering a broad blue ocean for the application of lithium-ion batteries. By virtue of inherent properties of lithium iron phosphate used as a positive electrode material, a battery containing the lithium iron phosphate is characterized by excellent safety performance, longevity, excellent high-temperature performance, cost-effectiveness, and environment friendliness, and gains a competitive edge and a greater application prospect over other types of lithium-ion batteries. Although the lifespan of a lithium iron phosphate battery is relatively long, the battery life required for power batteries and the energy storage field is still increasing. How to further enhance the storage performance, cycle performance, safety performance, and kinetic performance of the lithium-ion batteries cost-effectively is still of high significance.

To achieve a higher energy density and use a smaller amount of components such as a current collector and a separator for cost-effectiveness, it is necessary to increase a coating weight per unit area of an electrode plate and a compacted density. However, the increase of the coating weight and compacted density brings challenges such as poor electrolyte infiltration in a high-capacity battery cell, a low electrolyte retention rate, fast fading of cycle capacity, lithium plating during low-temperature charging, end-of-life lithium plating, and a high-resistance-induced temperature increment, and poses severe risks of life reduction and safety hazards.

### SUMMARY

In view of the problems in the prior art, this application provides an electrochemical device. The electrochemical device is improved with respect to long-term cycle performance and high-temperature storage performance, and maintains excellent charge performance and energy efficiency.

According to a first aspect, this application provides an electrochemical device. The electrochemical device includes a positive electrode, a negative electrode, a separator, and an electrolytic solution. The electrolytic solution includes a lithium salt, an organic solvent, and an additive. A normal-temperature conductivity of the electrolytic solution is b mS/cm, a single-side positive coating weight is a g/1540.25 mm$^2$, and a relationship between a and b satisfies: $b \geq 50.859a^2 - 16.044a + 8.2071$, where $0.2 \leq a \leq 0.55$. In this application, the normal-temperature conductivity means a conductivity measured at a temperature of 20 °C to 30 °C. According to some embodiments of this application, the normal-temperature conductivity means a conductivity measured at 25 °C.

By defining a relationship between the normal-temperature conductivity of the electrolytic solution and the single-side positive coating weight, this application solves the problems such as poor infiltration, insufficient film formation, a plunge of the cycle capacity, and an excessively narrow SOC window, which are caused by the increase of the positive coating weight and the compacted density. When the normal-temperature conductivity of the electrolytic solution and the single-side positive coating weight satisfy the foregoing relationship, the electrochemical device can achieve excellent longevity in addition to an ultra-high energy density.

According to some embodiments of this application, b is less than or equal to 20.

According to some embodiments of this application, based on a total mass of the electrolytic solution, a mass percent of the lithium salt is c%, and a relationship between c and a satisfies: when $0.2 \leq a \leq 0.4$, $c \geq 1707a^3 - 1393.9a^2 + 391.4a - 30.28$; and when $0.4 < a \leq 0.55$, $12.5 \leq c \leq 16.25$. According to some embodiments of this application, $0.2 \leq a \leq 0.4$, $c \geq 1707a^3 - 1393.9a^2 + 391.4a - 30.28$. According to other embodiments of this application, based on a total mass of the electrolytic solution, a mass percent of the lithium salt is c%, and a relationship between c and a satisfies: $0.4 < a \leq 0.55$, and $12.5 \leq c \leq 16.25$.

According to some embodiments of this application, based on a total mass of the electrolytic solution, a mass percent of the lithium salt is c%, where $6.25 \leq c \leq 18.75$. According to some embodiments of this application, $8.75 \leq c \leq 16.25$. According to some embodiments of this application, $12.5 \leq c \leq 16.25$.

According to some embodiments of this application, the lithium salt is one or more selected from lithium hexafluorophosphate (LiPF$_6$), lithium hexafluoroarsenate, lithium perchlorate, lithium bis(fluorosulfonyl)imide (LiFSI), or lithium bis(trifluoromethanesulfonyl)imide (LiTFSI). According to some embodiments of this application, the lithium salt

includes $LiPF_6$.

According to some embodiments of this application, the additive includes fluorinated carbonate. The fluorinated carbonate can form a stable SEI film on the surface of the negative electrode during chemical formation of the electrochemical device, and suppress reductive decomposition of other ingredients of the electrolytic solution on the surface of the negative electrode, thereby improving the cycle performance of the electrochemical device and suppressing gassing during storage and cycling.

According to some embodiments of this application, based on a total mass of the electrolytic solution, a mass percent of the fluorinated carbonate is d%, and a relationship between d and a satisfies: $10a - 3 \leq d \leq 4$. According to some embodiments of this application, $10a - 3 \leq d \leq 4$, and $0.3 \leq a \leq 0.55$. According to some embodiments of this application, the fluorinated carbonate is fluoroethylene carbonate. When the mass percent of the fluoroethylene carbonate is deficient, the fluoroethylene carbonate is not significantly effective in strengthening the SEI on the surface of the negative electrode or improving the cycle performance of the electrochemical device. When the mass percent of the fluoroethylene carbonate is higher than 4%, the fluoroethylene carbonate will decompose to generate more HF to aggravate the corrosion of the SEI instead, and the relatively low electrochemical stability of the fluoroethylene carbonate is prone to cause gassing of a battery cell.

According to some embodiments of this application, the organic solvent includes an organic solvent with at most 5 carbon atoms and a boiling point of at most 120 °C. According to some further embodiments of this application, based on a total mass of the electrolytic solution, a mass percent of the organic solvent with at most 5 carbon atoms and a boiling point of at most 120 °C is greater than or equal to 30%. The organic solvent with at most 5 carbon atoms and a boiling point of at most 120 °C possesses a low viscosity and a high dielectric constant, and can significantly improve the infiltration performance of the electrolytic solution, improve the electrolyte retention rate, and improve the quality of the SEI film.

According to some embodiments of this application, the organic solvent with at most 5 carbon atoms and with a boiling point of at most 120 °C includes at least one of dimethyl carbonate (DMC), ethyl methyl carbonate (EMC), methyl acetate (MA), ethyl acetate (EA), propyl acetate (PA), methyl propionate (MP), ethyl propionate (EP), methyl formate (MF), ethyl formate (EF), propyl formate (PF), tetrahydrofuran (THF), 1,3-dioxolane (1,3-DOL), or ethylene glycol dimethyl ether (DME).

According to some embodiments of this application, the electrolytic solution further includes ethylene carbonate (EC). The added ethylene carbonate can further improve the cycle life of the lithium-ion battery, suppress the degassing caused by decomposition in the electrolytic solution, enhance the safety performance, and extend the cycle life.

According to some embodiments of this application, the electrolytic solution satisfies at least one of conditions (I) to (III): (I) a mass ratio between an organic solvent with at most 5 carbon atoms and a boiling point of at most 120 °C and ethylene carbonate is 0.75 to 3; (II) a mass ratio between ethylene carbonate and lithium hexafluorophosphate is 0.031 to 0.343; and (III) a mass ratio between an organic solvent with at most 5 carbon atoms and a boiling point of at most 120 °C and lithium hexafluorophosphate is 1.8 to 7.0.

According to some embodiments of this application, the additive includes an S=O functional group-containing compound, the S=O functional group-containing compound is at least one selected from 1,3-propane sultone (PS), ethylene sulfate (DTD), methylene methyl disulfonate (MMDS), propene sultone (PES), 4-methyl ethylene sulfate (PCS), or 1,4-butyl sultone (BS). According to some embodiments of this application, based on a total mass of the electrolytic solution, a mass percent of the S=O functional group-containing compound is 0.01% to 3%. According to some embodiments of this application, based on a total mass of the electrolytic solution, a mass percent of the S=O functional group-containing compound is 0.1% to 3%. When the mass percent of the S=O functional group-containing compound is less than 0.1%, the effect of the compound in forming the SEI on the surface of positive and negative electrodes is insufficient, and the effect of the compound in improving the storage performance and high-temperature storage performance of the lithium-ion battery is insignificant. When the mass percent of the S=O functional group-containing compound is higher than 3%, the film-forming resistance at cathode and anode electrolyte interfaces is excessive, thereby deteriorating the charge-and-discharge performance, especially the low-temperature charge-and-discharge performance.

According to some embodiments of this application, the additive includes a lithium-containing additive, and the lithium-containing additive is at least one selected from $LiPO_2F_2$, LiDFOB, LiBOB, $LiBF_4$, $B_4Li_2O_7$, $Li_3BO_3$ or $CF_3LiO_3S$. According to some embodiments of this application, based on a total mass of the electrolytic solution, a mass percent of the lithium-containing additive is 0.01% to 3%. When the mass percent of the lithium-containing additive is less than 0.01%, the effect of the additive on the passivation of the negative electrode is insufficient, and the effect in improving the cycle performance of the electrochemical device is insignificant. When the mass percent of the lithium salt compound is higher than 3%, the lithium salt compound is not significantly effective in alleviating the passivation of the negative electrode, but increases the cost of the electrolytic solution, thereby being not cost-effective. However, further increase of the dosage of LiFSI and LiTFSI can significantly increase the conductivity of the electrolytic solution and improve the kinetics of the electrochemical device.

According to some embodiments of this application, the positive electrode satisfies at least one of conditions (A) to (D): (A) the positive electrode includes a positive active material layer, and a compacted density of the positive active material layer is 1.7 g/cm$^3$ to 2.5 g/cm$^3$; (B) the positive electrode includes a positive active material, and the positive active material includes at least one of lithium iron phosphate or lithium manganese iron phosphate; (C) the positive electrode includes a positive active material, and a particle diameter $D_{50}$ of the positive active material is 0.5 $\mu$m to 2.0 $\mu$m; and (D) the positive electrode includes a positive active material, and a BET specific surface area of the positive active material is 8 m$^2$/g to 25 m$^2$/g.

According to some embodiments of this application, the negative electrode includes a graphite material. According to some embodiments of this application, the graphite material satisfies at least one of conditions (E) to (H): (E) a BET specific surface area of the graphite material is 0.9 m$^2$/g to 1.7 m$^2$/g; (F) $D_{v50}$ of the graphite material is 12 $\mu$m to 20 $\mu$m; (G) a Raman Id/Ig ratio of the graphite material is 0.25 to 0.5; and (H) the graphite material includes one or more of Al, Fe, Cu, Zn, Cr, Si, Na, P, or S. According to some embodiments of this application, the graphite material satisfies at least two or at least three of the foregoing conditions (E) to (H). According to some embodiments of this application, the graphite material satisfies the foregoing conditions (E), (F), (G), and (H) concurrently.

According to a second aspect, this application provides an electronic device. The electronic device includes the electrochemical device according to the first aspect of this application.

By optimizing the electrolytic solution, the electrochemical device according to this application improves the kinetics of the electrolytic solution, reduces the film-forming resistance, and significantly improve the longevity and safety performance of the electrochemical device (such as a lithium-ion battery), thereby reducing the cost and being very cost-effective.

## DETAILED DESCRIPTION OF EMBODIMENTS

Embodiments of this application will be described in detail below. The embodiments of this application are not to be construed as a limitation on this application.

A list of items referred to by using the terms such as "at least one of' may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

After research and a large number of experimental verifications, the applicant thereof finds that, for batteries based on a lithium iron phosphate system, the coating weight per unit area of the electrode plate and the compacted density are increased in order to increase the energy density and reduce the cost. The increase of the coating weight and compacted density brings challenges such as poor electrolyte infiltration in a battery cell, a low electrolyte retention rate, fast fading of cycle capacity, lithium plating during low-temperature charging, end-of-life lithium plating, and high-resistance-induced temperature increment, and poses severe risks of life reduction and safety hazards. With the increase of the capacity, the risks build up significantly. By defining a relationship between the normal-temperature conductivity of the electrolytic solution and the single-side positive coating weight, this application solves the problems such as poor infiltration, insufficient film formation, a plunge of the cycle capacity, and an excessively narrow SOC window, which are caused by the increase of the positive coating weight and the compacted density.

According to a first aspect, this application provides an electrochemical device. The electrochemical device includes a positive electrode, a negative electrode, a separator, and an electrolytic solution. The electrolytic solution includes a lithium salt, an organic solvent, and an additive. A normal-temperature conductivity of the electrolytic solution is b mS/cm, a single-side positive coating weight is a g/1540.25 mm$^2$, and a relationship between a and b satisfies: $b \geq 50.859a^2 - 16.044a + 8.2071$, where $0.2 \leq a \leq 0.55$. In this application, the normal-temperature conductivity means a conductivity measured at a temperature of 20 °C to 30 °C. According to some embodiments of this application, the normal-temperature conductivity means a conductivity measured at 25 °C. When the normal-temperature conductivity of the electrolytic solution and the single-side positive coating weight satisfy the foregoing relationship, the electrochemical device can achieve excellent longevity in addition to an ultra-high energy density.

According to some embodiments of this application, b is less than or equal to 20. According to some embodiments of this application, $8 \leq b \leq 20$. In some embodiments, b is 8, 9, 10, 11, 12, 13, 14, 15, 16, 17, 18, 19, or 20, or any value falling within a range formed by any two thereof.

According to some embodiments of this application, based on a total mass of the electrolytic solution, a mass percent of the lithium salt is c%, and a relationship between c and a satisfies: when $0.2 \leq a \leq 0.4$, $c \geq 1707a^3 - 1393.9a^2 + 391.4a - 30.28$; and when $0.4 < a \leq 0.55$, $12.5 \leq c \leq 16.25$. According to some embodiments of this application, $0.2 \leq a \leq 0.4$, $c \geq 1707a^3 - 1393.9a^2 + 391.4a - 30.28$. According to other embodiments of this application, based on a total mass of the electrolytic solution, a mass percent of the lithium salt is c%, and a relationship between c and a satisfies:

0.4 < a ≤ 0.55, and 12.5 ≤ c ≤ 16.25. Appropriately increasing the concentration of the lithium salt can alleviate the problems such as thick-electrode-plate-induced concentration polarization build-up, black flecks on an anode electrolyte interface, and lithium plating.

According to some embodiments of this application, based on a total mass of the electrolytic solution, a mass percent of the lithium salt is c%, where 6.25 ≤ c ≤ 18.75. According to some embodiments of this application, 8.75 ≤ c ≤ 16.25. According to some embodiments of this application, 12.5 ≤ c ≤ 16.25.

According to some embodiments of this application, the lithium salt is one or more selected from lithium hexafluorophosphate (LiPF$_6$), lithium hexafluoroarsenate, lithium perchlorate, lithium bis(fluorosulfonyl)imide (LiFSI), or lithium bis(trifluoromethanesulfonyl)imide (LiTFSI). According to some embodiments of this application, the lithium salt includes LiPF$_6$.

According to some embodiments of this application, the additive includes fluorinated carbonate. A mass percent of the fluorinated carbonate is d%, and a relationship between d and a satisfies: 10a - 3 ≤ d ≤ 4. According to some embodiments of this application, the additive includes fluorinated carbonate. A mass percent of the fluorinated carbonate is d%, and a relationship between d and a satisfies: 10a - 3 ≤ d ≤ 4, and 0.3 ≤ a ≤ 0.55. According to some embodiments of this application, the fluorinated carbonate is fluoroethylene carbonate (FEC). The added fluoroethylene carbonate can form a low-resistance SEI film at the anode electrolyte interface, and the SEI film is well self-repairable during operation, thereby suppressing lithium plating and black flecks during cycles and achieving an ultra-long cycle life.

According to some embodiments of this application, the organic solvent includes an organic solvent with at most 5 carbon atoms and with a boiling point of at most 120 °C. Based on a mass of the electrolytic solution, a mass percent of the organic solvent with at most 5 carbon atoms and with a boiling point of at most 120 °C is greater than or equal to 30%. According to some embodiments of this application, the organic solvent with at most 5 carbon atoms and with a boiling point of at most 120 °C includes at least one of dimethyl carbonate (DMC), ethyl methyl carbonate (EMC), methyl acetate (MA), ethyl acetate (EA), propyl acetate (PA), methyl propionate (MP), ethyl propionate (EP), methyl formate (MF), ethyl formate (EF), propyl formate (PF), tetrahydrofuran (THF), 1,3-dioxolane (1,3-DOL), or ethylene glycol dimethyl ether (DME). The organic solvent with at most 5 carbon atoms and a boiling point of at most 120 °C possesses a low viscosity and a high dielectric constant, and can significantly improve the infiltration performance of the electrolytic solution, improve the electrolyte retention rate, and improve the quality of the SEI film.

According to some embodiments of this application, the electrolytic solution further includes ethylene carbonate. The added ethylene carbonate can further improve the cycle life of the lithium-ion battery, suppress the degassing caused by decomposition in the electrolytic solution, enhance the safety performance, and extend the cycle life.

According to some embodiments of this application, the electrolytic solution satisfies at least one of conditions (I) to (III): (I) a mass ratio between an organic solvent with at most 5 carbon atoms and a boiling point of at most 120 °C and ethylene carbonate is 0.75 to 3; (II) a mass ratio between ethylene carbonate and lithium hexafluorophosphate is 0.031 to 0.343; and (III) a mass ratio between an organic solvent with at most 5 carbon atoms and a boiling point of at most 120 °C and lithium hexafluorophosphate is 1.8 to 7.0.

According to some embodiments of this application, the additive includes an S=O functional group-containing compound. The added S=O functional group-containing compound can further improve the cycle life of the lithium-ion battery, suppress the degassing caused by decomposition in the electrolytic solution, enhance the safety performance, and extend the cycle life. According to some embodiments of this application, based on a total mass of the electrolytic solution, a mass percent of the S=O functional group-containing compound is 0.01% to 3%. According to some embodiments of this application, based on a total mass of the electrolytic solution, a mass percent of the S=O functional group-containing compound is 0.1% to 3%. When the mass percent of the S=O functional group-containing compound is less than 0.1%, the effect of the compound in forming the SEI on the surface of positive and negative electrodes is insufficient, and the effect of the compound in improving the storage performance and high-temperature storage performance of the lithium-ion battery is insignificant. When the mass percent of the S=O functional group-containing compound is higher than 3%, the film-forming resistance at cathode and anode electrolyte interfaces is excessive, thereby deteriorating the charge-and-discharge performance, especially the low-temperature charge-and-discharge performance.

According to some embodiments of this application, the S=O functional group-containing compound is at least one selected from 1,3-propane sultone (PS), ethylene sulfate (DTD), methylene methyl disulfonate (MMDS), propene sultone (PES), 4-methyl ethylene sulfate (PCS), or 1,4-butyl sultone (BS).

According to some embodiments of this application, the additive includes at least one of LiPO$_2$F$_2$, LiDFOB, LiBOB, LiBF$_4$, B$_4$Li$_2$O$_7$, Li$_3$BO$_3$, or CF$_3$LiO$_3$S. Such lithium-containing additives can further improve the cycle life of the lithium-ion battery, suppress the gassing caused by decomposition in the electrolytic solution, enhance the safety performance, and extend the cycle life. According to some embodiments of this application, based on a total mass of the electrolytic solution, a mass percent of the lithium-containing additive is 0.01% to 3%. When the mass percent of the lithium-containing additive is less than 0.01%, the effect of the additive on the passivation of the negative electrode is insufficient, and the effect in improving the cycle performance of the electrochemical device is insignificant. When the mass percent of the lithium salt compound is higher than 3%, the lithium salt compound is not significantly effective in alleviating the passivation of the negative electrode, but increases the cost of the electrolytic solution, thereby being not cost-effective. However, further increase of the dosage of LiFSI and LiTFSI can significantly increase the conductivity of the electrolytic solution and improve the kinetics of the electrochemical device.

According to some embodiments of this application, the positive electrode satisfies at least one of conditions (A) to (D): (A) the positive electrode includes a positive active material layer, and a compacted density of the positive active material layer is 1.7 g/cm$^3$ to 2.5 g/cm$^3$; (B) the positive electrode includes a positive active material, and the positive active material includes at least one of lithium iron phosphate or lithium manganese iron phosphate; (C) the positive electrode includes a positive active material, and a particle diameter $D_{50}$ of the positive active material is 0.5 $\mu$m to 2.0 $\mu$m; and (D) the positive electrode includes a positive active material, and a BET specific surface area of the positive active material is 8 m$^2$/g to 25 m$^2$/g.

According to some embodiments of this application, the positive electrode includes a positive active material layer, and a compacted density of the positive active material layer is 1.7 g/cm$^3$ to 2.5 g/cm$^3$; According to some embodiments of this application, the positive electrode includes a positive active material, and the positive active material includes at least one of lithium iron phosphate or lithium manganese iron phosphate; According to some embodiments of this application, the positive electrode includes a positive active material, and a particle diameter $D_{50}$ of the positive active material is 0.5 $\mu$m to 2.0 $\mu$m. According to some embodiments of this application, the positive electrode includes a positive active material, and a BET specific surface area of the positive active material is 8 m$^2$/g to 25 m$^2$/g.

According to some embodiments of this application, the positive electrode includes a current collector and a positive active material layer disposed on the current collector. In some embodiments, the current collector may include, but without being limited to, aluminum. In some embodiments, the positive active material layer includes at least one of lithium iron phosphate or lithium manganese iron phosphate; The positive active material layer may further include a binder, and optionally, a conductive material. The binder improves bonding between particles of the positive active material and bonding between the positive active material and a current collector. In some embodiments, the binder includes, but is not limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, or the like. In some embodiments, the conductive material includes, but is not limited to, a carbon-based material, a metal-based material, a conductive polymer, or a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The positive electrode may be prepared according to a preparation method known in the art. For example, the positive electrode may be obtained by the following method: mixing an active material, a conductive material, and a binder in a solvent to prepare an active material slurry, and coating the current collector with the active material slurry. In some embodiments, the solvent may include, but is not limited to N-methyl-pyrrolidone.

According to some embodiments of this application, the negative electrode includes a graphite material. According to some embodiments of this application, the graphite material satisfies at least one of conditions (E) to (H): (E) a BET specific surface area of the graphite material is 0.9 m$^2$/g to 1.7 m$^2$/g; (F) $D_{v50}$ of the graphite material is 12 $\mu$m to 20 $\mu$m; (G) a Raman Id/Ig ratio of the graphite material is 0.25 to 0.5; and (H) the graphite material includes one or more of Al, Fe, Cu, Zn, Cr, Si, Na, P, or S. According to some embodiments of this application, the graphite material satisfies at least two or at least three of the foregoing conditions (E) to (H). According to some embodiments of this application, the graphite material satisfies the foregoing conditions (E), (F), (G), and (H) concurrently.

According to some embodiments of this application, the negative electrode further includes a conductive agent and a binder. According to some embodiments of this application, the conductive agent includes, but is not limited to, a carbon-based material, a metal-based material, a conductive polymer, or a mixture thereof. In some embodiments, the carbon-based material is selected from carbon black, acetylene black, Ketjen black, carbon fibers, or any combination thereof. In some embodiments, the metal-based material is selected from metal powder, metal fibers, copper, nickel, aluminum, or silver. In some embodiments, the conductive polymer is a polyphenylene derivative. According to some embodiments of this application, the binder includes, but is not limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, or the like.

According to some embodiments of this application, the negative electrode further includes a current collector. The negative active material is located on the current collector. In some embodiments, the current collector includes: a copper foil, a nickel foil, a stainless steel foil, a titanium foil, foamed nickel, foamed copper, a conductive-metal-clad polymer substrate, or any combination thereof.

The negative electrode according to this application may be prepared by a method known in the art. A typical method for preparing a negative electrode is: mixing a negative active material, optionally a conductive agent (for example, carbon black and other carbon materials, and metal particles), a binder (such as SBR), other optional additives (such as PTC thermistor material), and other materials, dispersing the mixture in a solvent (such as deionized water), stirring well to form a slurry, and then coating a negative current collector with the slurry evenly, and drying the current collector to obtain a negative electrode containing a negative active layer; and subsequently, performing lithium supplementation for the negative electrode containing the negative active layer, so as to obtain a lithium-supplemented negative electrode in this application. Materials such as a metal foil or porous metal sheet may be used as a negative current collector.

The electrochemical device according to this application further includes a separator. The material and the shape of the separator for use in the electrochemical device according to this application are not particularly limited, and may be based on any technology disclosed in the prior art. In some embodiments, the separator includes a polymer or an inorganic compound or the like formed from a material that is stable to the electrolytic solution herein. For example, the separator may include a substrate layer and a surface treatment layer. The substrate layer is a non-woven fabric, film or composite film, which, in each case, have a porous structure. The material of the substrate layer is selected from at least one of polyethylene, polypropylene, polyethylene terephthalate, or polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film. The surface treatment layer is disposed on at least one surface of the substrate layer. The surface treatment layer may be a polymer layer or an inorganic compound layer, or a layer formed by mixing a polymer and an inorganic compound. The inorganic compound layer includes inorganic particles and a binder. The inorganic particles are at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is at least one selected from polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alkoxide, poly methyl methacrylate, polytetrafluoroethylene, or polyhexafluoropropylene. The polymer layer includes a polymer. The material of the polymer is at least one selected from polyamide, polyacrylonitrile, acrylate polymer, polyacrylic acid, polyacrylic acid sodium salt, polyvinylpyrrolidone, polyvinyl alkoxide, polyvinylidene difluoride, or poly(vinylidene fluoride-co-hexafluoropropylene).

According to a second aspect, this application provides an electronic device. The electronic device includes the electrochemical device according to the first aspect of this application.

The electronic device or apparatus according to this application is not particularly limited. In some embodiments, the electronic device according to this application includes, but is not limited to, a notebook computer, a pen-input computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

This application is further described below with reference to embodiments. Understandably, the embodiments are merely intended to illustrate this application but not to limit the scope of this application.

I. Preparing a lithium-ion battery

The lithium-ion batteries in the embodiments and the comparative embodiments of this application are all prepared according to the following method.

1. Preparing a positive electrode plate

Mixing a lithium iron phosphate material (LFP) as a positive active material, Super P as a conductive agent, and polyvinylidene difluoride as a binder at a weight ratio of 96.3: 1.5: 2.2, adding N-methyl-pyrrolidone (NMP), and stirring the mixture with a vacuum blender until the system is homogeneous and transparent, so as to obtain a positive slurry in which a solid content is 72 wt%. Coating a positive current collector aluminum foil with the positive slurry evenly, drying the aluminum foil at 85 °C, and performing cold calendering, cutting, and slitting, and then drying for 4 hours under an 85 °C vacuum condition to obtain a positive electrode plate.

2. Preparing a negative electrode plate

Mixing artificial graphite as a negative active material, Super P as a conductive agent, sodium carboxymethyl cellulose (CMC) as a thickener, and styrene butadiene rubber (SBR) as a binder at a weight ratio of 96.4: 1.5: 0.5: 1.6. Adding deionized water, and stirring the mixture with a vacuum mixer to obtain a negative slurry in which a solid content is 54 wt%. Coating a negative current collector copper foil with the negative slurry evenly, drying the copper foil at 85 °C, and performing cold calendering, cutting, and slitting. Drying for 12 hours under a 120 °C vacuum condition to obtain a negative electrode plate.

3. Preparing an electrolytic solution

Mixing ethylene carbonate (EC), propylene carbonate (PC), ethyl methyl carbonate (EMC), diethyl carbonate (DEC), and dimethyl carbonate (DMC) in a dry argon atmosphere glovebox at a ratio specified in each embodiment or comparative embodiment, adding an additive, dissolving and stirring the mixture well, and then adding a lithium salt LiPF$_6$. Mixing well to obtain an electrolytic solution.

4. Preparing a separator

Using a 7-$\mu$m-thick polyethylene (PE) film as a separator.

5. Preparing a lithium-ion battery

Stacking the positive electrode plate, the separator, and the negative electrode plate in such a sequence that the separator is located between the positive electrode plate and the negative electrode plate to serve a separation function. Winding the stacked structure to obtain an electrode assembly. Welding tabs, and putting the electrode assembly into an aluminum plastic film outer package. Injecting the prepared electrolytic solution into the dried electrode assembly, and performing steps such as vacuum sealing, standing, chemical formation (charging the battery cell at a constant current of 0.02 C until the voltage reaches 3.3 V, and then charging the battery cell at a constant current of 0.1 C until the voltage reaches 3.6 V), shaping, and capacity test to obtain a pouch-type lithium-ion battery (3.3 mm thick, 39 mm wide, and 96 mm long).

II. Method for testing the lithium-ion battery

1. Testing the cycle performance of the lithium-ion battery

Putting the lithium-ion battery into a 25° C thermostat, and leaving the battery to stand for 30 minutes so that the temperature of the lithium-ion battery is constant. Charging, after the lithium-ion battery reaches a constant-temperature state, the lithium-ion battery at a constant current of 1 C until the voltage reaches 3.65 V, and then charging the battery at a constant voltage of 3.65 V until the current reaches 0.05 C. Subsequently, discharging the battery at a constant current of 1 C until the voltage reaches 2.5 V, thereby completing a charge-and-discharge cycle. Repeating the charge-and-discharge cycle by starting from a 100% first-cycle discharge capacity, and counting the number of cycles accumulated when the discharge capacity fades to 65%. Using the number of cycles as an indicator of the cycle performance of the lithium-ion battery.
Testing the cycle performance of the lithium-ion battery at 45 °C in the same way as the 25 °C cycle performance test described above.

2. Testing the high-SOC high-temperature storage performance of the lithium-ion battery

Putting the lithium-ion battery into a 25° C thermostat, and leaving the battery to stand for 30 minutes so that the temperature of the lithium-ion battery is constant. Charging the battery at a constant current of 1 C until the voltage reaches 3.65 V, and then charging the battery at a constant voltage until the current reaches 0.05 C. Subsequently, discharging the battery at a constant current of 1 C until the voltage reaches 2.5 V, and recording the discharge capacity at this time as an initial capacity of the lithium-ion battery. Subsequently, charging the battery at a constant current of 0.5 C until the voltage reaches 3.65 V, and then charging the battery at a constant voltage until the current reaches 0.05 C. Recording the thickness of the battery with a micrometer. Moving the lithium-ion battery under test into a 60 °C thermostat and storing the battery for 90 days, during which the thickness of the battery is measured and recorded at intervals of 30 days. Subsequently, moving the battery into 25 °C thermostat, leaving the battery to stand for 60 minutes. Discharging the battery at a constant current of 1 C until the voltage reaches 2.5 V, and recording the discharge capacity at this time as a remaining capacity of the lithium-ion battery. Charging the battery at a constant current of 1 C until the voltage reaches 3.65 V, and then charging the battery at a constant voltage until the current reaches 0.05 C. Subsequently, discharging the battery at a constant current of 1 C until the voltage reaches 2.5 V, and recording the discharge capacity at this time as a reversible capacity of the lithium-ion battery. Measuring the THK (thickness), OCV (open circuit voltage), and IMP (impedance) of the battery. Discharging at 1 C until the voltage reaches 2.5 V, recording the reversible discharge capacity, and calculating the residual capacity retention rate and reversible capacity retention rate of lithium-ion batteries after a period of storage, and using the calculation results as indicators of the high-temperature storage performance of the lithium-ion battery.

Residual capacity retention rate = (residual capacity after 90-day storage - initial capacity of the battery cell)/initial capacity of the battery cell × 100%

Reversible capacity retention rate = (reversible capacity after 90-day storage - initial capacity of the battery cell)/initial capacity of the battery cell × 100%

3. Testing the high-temperature storage performance of the lithium-ion battery in a low 0% SOC state

Putting the lithium-ion battery into a 25° C thermostat, and leaving the battery to stand for 30 minutes so that the temperature of the lithium-ion battery is constant. Charging the battery at a constant current of 1 C until the voltage reaches 3.65 V, and then charging the battery at a constant voltage until the current reaches 0.05 C. Subsequently, discharging the battery at a constant current of 1 C until the voltage reaches 2.5 V, and recording the discharge capacity at this time as an initial capacity of the lithium-ion battery. Subsequently, measuring and recording the thickness of the battery with a micrometer. Moving the lithium-ion battery under test into a 60 °C thermostat and storing the battery for 90 days, during which the thickness of the battery is measured and recorded at intervals of 30 days. Subsequently, moving the battery into 25 °C thermostat, leaving the battery to stand for 60 minutes, and then charging the battery at a constant current of 1 C until the voltage reaches 3.65 V, and charging the battery at a constant voltage until the current reaches 0.05 C. Subsequently, discharging the battery at a constant current of 1 C until the voltage reaches 2.5 V, and recording the discharge capacity at this time as a reversible capacity of the lithium-ion battery. Measuring the THK (thickness), OCV (open circuit voltage), and IMP (impedance) of the battery. Discharging at 1 C until the voltage reaches 2.5 V, recording the thickness, calculating the thickness expansion rate of the lithium-ion battery after a period of storage, and using the calculation result as an indicator of the high-temperature storage performance of the lithium-ion battery in a 0% SOC state.

0% SOC storage thickness expansion rate = (thickness after 90-day storage - initial thickness of the battery cell)/initial thickness of the battery cell × 100%.

4. Testing the direct-current resistance (DCR) of the lithium-ion battery (-10 °C)

Putting the lithium-ion battery into a -10 °C high/low temperature thermostat, and leaving the battery to stand for 4 hours so that the temperature of the lithium-ion battery is constant. Charging the battery at a constant current of 0.1 C until the voltage reaches 3.65 V, and then charging the battery at a constant voltage of 3.65 V until the current reaches 0.05 C, and leaving the battery to stand for 10 minutes. Subsequently, discharging the battery at a constant current of 0.1 C until the voltage reaches 2.5 V. Recording the capacity at this time as an actual discharge capacity D0. Subsequently, leaving the battery to stand for 5 minutes, and charging the battery at a constant current of 0.1 C until the voltage reaches 3.65 V, and then charging the battery at a constant voltage of 3.65 V until the current reaches 0.05 C (the current is calculated based on the capacity corresponding to D0). Leaving the battery to stand for 10 minutes, and then discharging the battery at a constant current of 0.1 C for 3 hours (the current is calculated based on the capacity corresponding to D0), and recording the voltage V1 at this time. Next, discharging the battery at a constant current of 1 C rate for 1 second (during which the voltage is sampled at intervals of 100 ms, where the current rate is calculated based on the nominal capacity of the battery cell), and recording the voltage V2 at this time. Subsequently, calculating the direct current resistance (DCR) corresponding to the 70% state of charge (SOC) of the battery cell according to the following formula:

$$\text{DCR corresponding to } 70\% \text{ SOC} = (V2 - V1)/1\,C$$

5. Testing the round-trip energy efficiency RTE of the lithium-ion battery (25 °C)

Putting the lithium-ion battery into a 25° C thermostat, and leaving the battery to stand for 30 minutes so that the temperature of the lithium-ion battery is constant. Discharging the battery at a constant current of 0.5 C until the voltage reaches 2.5 V, and then leaving the battery to stand for 15 minutes. Charging the battery at a constant current of 0.5 C until the voltage reaches 3.65 V, and then charging the battery at a constant voltage of 3.65 V until the current reaches 0.05 C. Leaving the battery to stand for 60 minutes, and then discharging the battery at a constant current of 0.5 C until the voltage reaches 2.5 V, thereby completing one cycle. Repeating the foregoing charge-and-discharge steps for three consecutive cycles at the current specified above. Recording the charge energy and discharge energy separately, and calculating the round-trip energy efficiency by using the charge energy Ec and discharge energy Ed of the last 1 cycle:

$$\text{Round trip energy efficiency} = \text{discharge energy Ed/charge energy Ec} \times 100\%$$

6. Testing the charge performance of the lithium-ion battery (lithium plating growth rate)

1) Putting the lithium-ion battery into a -10 °C high/low temperature thermostat, and leaving the battery to stand for 30 hours so that the temperature of the lithium-ion battery is constant. 2) After the lithium-ion battery reaches a constant-temperature state, discharging the lithium-ion battery at a constant current of 0.5 C until the voltage reaches 2.5 V. 3) Leaving the battery to stand for 10 minutes, and charging the battery at a constant current of 0.1 C until the voltage reaches 3.65 V, and then charging the battery at a constant voltage of 3.65 V until the current reaches 0.05 C (recording the charge capacity $C_1$). 4) Leaving the battery to stand for 10 minutes, and then discharging the battery at a constant current of 0.5 C until the voltage reaches 2.5 V, leaving the battery to stand for 10 minutes, and then discharging the battery at a constant current of 0.025 C until the voltage reaches 2.5 V, and further, leaving the battery to stand for 10 minutes, discharging the battery at a constant current of 0.005 C until the voltage reaches 2.5 V, and recording the discharge capacity at the end of this step as $D_1$. 5) Leaving the battery to stand for 10 minutes, and then charging the battery at a constant current of 0.3 C until the voltage reaches 3.65 V, and charging the battery at a constant voltage of 3.65 V until the current reaches 0.05 C. 6) Leaving the battery to stand for 10 minutes, discharging the battery at a constant current of 0.5 C until the voltage reaches 2.5 V, and then leaving the battery to stand for 10 minutes, discharging the battery at a constant current of 0.025 C until the voltage reaches 2.5 V, and further, leaving the battery to stand for 10 minutes, and discharging the battery at a constant current of 0.005 C until the voltage reaches 2.5 V; and 7) repeating steps 5) and 6) for 12 times, and recording the discharge capacity at the end of the last cycle as $D_{12}$. Calculating the lithium plating growth rate as an indicator of the charge performance (a lower lithium plating growth rate indicates milder lithium plating; when the lithium plating growth rate is less than 0.3, the lithium plating is hardly visible to the naked eye). The lithium plating growth rate is calculated by the following formula:

$$\text{Lithium plating growth rate} = \frac{\text{first cycle charge capacity } C_1 - \text{last cycle discharge capacity } D_{12}}{\text{first cycle charge capacity } C_1}$$

7. Testing the temperature increment during constant-temperature discharge of the lithium-ion battery (25 °C)

Putting the lithium-ion battery into a 25° C thermostat, and leaving the battery to stand for 30 minutes so that the temperature of the lithium-ion battery is constant. Discharging the battery at a constant current of 0.5 C until the voltage reaches 2.5 V, and then leaving the battery to stand for 15 minutes. Charging the battery at a constant current of 0.5 C until the voltage reaches 3.65 V, and then charging the battery at a constant voltage of 3.65 V until the current reaches 0.05 C. Leaving the battery to stand for 60 minutes, and then discharging the battery at a constant current of 6 C until the voltage reaches 2.5 V. Recording the temperature T at the center of the outer surface of the battery cell during discharge of the battery, and calculating the temperature increment value (T-25 °C).

8. Testing the charge performance of the lithium-ion battery

Discharging the battery at 0.5 C until the voltage reaches 2.5 V under a 25 °C condition, and charging the battery at a constant current of 1 C until the voltage reaches 6.5 V, and then charging the battery at a constant voltage for 3 hours. Monitoring the temperature change on the surface of the battery cell (the battery passes the test if the battery does not catch fire, bum, or explode).

9. Testing the conductivity of the electrolytic solution (25 °C)

Putting the electrolytic solution in a 25 °C constant-temperature water bath to stay for 1 hour at the constant temperature, and measuring the normal-temperature conductivity with a conductivity meter, and recording the measurement data. (Keeping the temperature constant during the test)

10. Testing the surface tension of the electrolytic solution (25 °C)

Putting the electrolytic solution in a 25 °C constant-temperature water bath to stay for 1 hour at the constant temperature, and measuring the normal-temperature surface tension with a surface tension meter, and recording the measurement data.

(Keeping the temperature constant during the test)

III. Test results

1. Effect of the conductivity of the electrolytic solution on the battery performance

Table 1 shows the parameters such as single-side positive coating weight and normal temperature (25 °C) conductivity of the electrolytic solution as well as the battery performance data of Embodiments 1-1 to 1-20 and Comparative Embodiments 1-1 to 1-6.

EP 4 394 916 A1

Table 1

| Embodiment and Comparative Embodiment | Single-side positive coating weight (a g/1540.25 mm$^2$) | 50.859a$^2$ - 16.044a + 8.2071 | Normal-temperature conductivity (b, mS/cm) | Number of cycles at 25 °C (capacity fading to 70%) | Number of cycles at 45 °C (capacity fading to 70%) | DCR at - 10 °C and 70% SOC (mΩ) | Lithium plating growth rate during charge at -10 °C and 0.3 C (%) | Temperature increment during discharge at 6 C (°C) | Surface tension of electrolytic solution at 25 °C (mN/m) |
|---|---|---|---|---|---|---|---|---|---|
| Comparative Embodiment 1-1 | 0.2 | 7.032 | 6.5 | 950 | 679 | 130 | 0.52 | 38 | 35 |
| Comparative Embodiments 1 to 2 | 0.28 | 7.702 | 7.2 | 912 | 657 | 142 | 0.53 | 41 | 32 |
| Comparative Embodiments 1 to 3 | 0.32 | 8.280 | 7.8 | 859 | 576 | 153 | 0.55 | 44 | 31 |
| Comparative Embodiments 1 to 4 | 0.34 | 8.631 | 8.1 | 813 | 556 | 158 | 0.56 | 46 | 30 |
| Comparative Embodiments 1 to 5 | 0.4 | 9.926 | 9.4 | 424 | 295 | 166 | 0.58 | 53 | 26 |
| Comparative Embodiments 1 to 6 | 0.5 | 12.90 | 12.4 | 314 | 221 | 180 | 0.41 | 65 | 18 |
| Embodiment 1-1 | 0.2 | 7.032 | 7.10 | 1345 | 941 | 127 | 0.36 | 37 | 32.5 |
| Embodiments 1 to 2 | 0.2 | 7.032 | 8 | 1499 | 1004 | 119 | 0.25 | 36 | 30 |
| Embodiments 1 to 3 | 0.2 | 7.032 | 9 | 1578 | 1064 | 117 | 0.12 | 35 | 27 |
| Embodiments 1 to 4 | 0.2 | 7.032 | 10 | 1581 | 1073 | 116 | 0.08 | 34 | 24 |
| Embodiments 1 to 5 | 0.28 | 7.702 | 7.80 | 1312 | 897 | 139 | 0.34 | 38 | 31 |

12

| Embodiment and Comparative Embodiment | Single-side positive coating weight (a g/1540.25 mm²) | $50.859a^2 - 16.044a + 8.2071$ | Normal-temperature conductivity (b, mS/cm) | Number of cycles at 25 °C (capacity fading to 70%) | Number of cycles at 45 °C (capacity fading to 70%) | DCR at -10 °C and 70% SOC (mΩ) | Lithium plating growth rate during charge at -10 °C and 0.3 C (%) | Temperature increment during discharge at 6 C (°C) | Surface tension of electrolytic solution at 25 °C (mN/m) |
|---|---|---|---|---|---|---|---|---|---|
| Embodiments 1 to 6 | 0.28 | 7.702 | 9 | 1427 | 985 | 132 | 0.15 | 36 | 27 |
| Embodiments 1 to 7 | 0.28 | 7.702 | 10 | 1501 | 1007 | 127 | 0.1 | 35 | 24 |
| Embodiments 1 to 8 | 0.28 | 7.702 | 11 | 1539 | 1042 | 123 | 0.07 | 34 | 20 |
| Embodiments 1 to 9 | 0.34 | 8.631 | 8.70 | 1008 | 659 | 150 | 0.32 | 44 | 29 |
| Embodiments 1 to 10 | 0.34 | 8.631 | 10 | 1301 | 846 | 142 | 0.17 | 42 | 24 |
| Embodiments 1 to 11 | 0.34 | 8.631 | 11 | 1425 | 955 | 135 | 0.1 | 40 | 20 |
| Embodiments 1 to 12 | 0.34 | 8.631 | 12 | 1436 | 973 | 133 | 0.06 | 39 | 15 |
| Embodiments 1 to 13 | 0.4 | 9.926 | 10.0 | 647 | 454 | 160 | 0.37 | 50 | 24.4 |
| Embodiments 1 to 14 | 0.4 | 9.926 | 11 | 1050 | 719 | 151 | 0.14 | 47 | 20 |
| Embodiments 1 to 15 | 0.4 | 9.926 | 12 | 1387 | 945 | 145 | 0.09 | 45 | 15 |
| Embodiments 1 to 16 | 0.4 | 9.926 | 15 | 1420 | 965 | 142 | 0.04 | 44 | 11 |
| Embodiments 1 to 17 | 0.5 | 12.90 | 12.9 | 714 | 491 | 171 | 0.12 | 62 | 14 |
| Embodiments 1 to 18 | 0.5 | 12.90 | 14 | 1131 | 769 | 164 | 0.08 | 54 | 12.5 |

(continued)

| Embodiment and Comparative Embodiment | Single-side positive coating weight (a g/1540.25 mm²) | 50.859a² - 16.044a + 8.2071 | Normal-temperature conductivity (b, mS/cm) | Number of cycles at 25°C (capacity fading to 70%) | Number of cycles at 45°C (capacity fading to 70%) | DCR at -10°C and 70% SOC (mΩ) | Lithium plating growth rate during charge at -10°C and 0.3C (%) | Temperature increment during discharge at 6C (°C) | Surface tension of electrolytic solution at 25°C (mN/m) |
|---|---|---|---|---|---|---|---|---|---|
| Embodiments 1 to 19 | 0.5 | 12.90 | 15 | 1235 | 851 | 160 | 0.05 | 51 | 11 |
| Embodiments 1 to 20 | 0.5 | 12.90 | 16 | 1267 | 869 | 159 | 0.04 | 50 | 10 |

Note: The normal-temperature conductivity in the embodiments and comparative embodiments in Table 1 is achieved by adjusting the type and weight percent of the solvent as well as the concentration of the lithium salt.

As can be seen from the embodiments and comparative embodiments in Table 1, when the conductivity of the electrolytic solution is higher, the kinetics are higher, and therefore, the cycle performance of the battery with a thick coating layer is higher, the resistance is lower, the lithium plating is slighter, the temperature increment during the discharge at a high current is smaller, the interfacial tension of the electrolytic solution is lower, and the infiltration is more effective.

2. Testing the impact of the relationship between lithium salt content and positive coating weight on the battery performance

Table 2 shows the parameters such as single-side positive coating weight, parameters of lithium salt in the electrolytic solution, and battery performance data of Embodiments 2-1 to 2-9 and Comparative Embodiments 2-1 to 2-6.

**Table 2**

| Embodiment and Comparative Embodiment | Single-side positive coating weight (a, g/1540.25 mm$^2$) | 50.859a$^2$ - 16.044a + 8.2071 | Normal-temperature conductivity (b, mS/cm) | Content of lithium salt (%) | Number of cycles at 25 °C (capacity fading to 70%) | Number of cycles at 45 °C (capacity fading to 70%) | DCR at -10 °C and 70% SOC (mΩ) | Lithium plating growth rate during charge at -10 °C and 0.3 C (%) | Temperature increment during discharge at 6 C (°C) |
|---|---|---|---|---|---|---|---|---|---|
| Comparative Embodiments 2 to 1 | 0.2 | 7.03 | 6.3 | 5 | 950 | 679 | 130 | 1.2 | 38 |
| Comparative Embodiment 2-2 | 0.28 | 7.70 | 7.1 | 6.25 | 912 | 657 | 142 | 1.4 | 41 |
| Comparative Embodiments 2 to 3 | 0.32 | 8.28 | 7.7 | 7.5 | 859 | 576 | 153 | 1.1 | 44 |
| Comparative Embodiments 2 to 4 | 0.34 | 8.63 | 8.1 | 8.75 | 813 | 556 | 158 | 1 | 46 |
| Comparative Embodiments 2 to 5 | 0.4 | 9.93 | 8.5 | 11.3 | 424 | 295 | 166 | 0.51 | 53 |
| Comparative Embodiments 2 to 6 | 0.5 | 12.90 | 8.5 | 11.3 | 179 | 119 | 176 | 0.89 | 66 |
| Embodiments 2 to 1 | 0.2 | 7.03 | 7.1 | 6.25 | 2307 | 1576 | 127 | 0.91 | 37 |
| Embodiments 2 to 2 | 0.2 | 7.03 | 7.7 | 7.5 | 3366 | 2305 | 125 | 0.31 | 35 |
| Embodiments 2 to 3 | 0.2 | 7.03 | 8.4 | 10 | 3545 | 2399 | 124 | 0.17 | 34 |
| Embodiments 2 to 4 | 0.2 | 7.03 | 8.4 | 12.5 | 3580 | 2431 | 124 | 0.13 | 34 |
| Embodiments 2 to 5 | 0.28 | 7.70 | 7.7 | 7.5 | 1693 | 1169 | 139 | 0.55 | 40 |

EP 4 394 916 A1

(continued)

| Embodiment and Comparative Embodiment | Single-side positive coating weight (a, g/1540.25 mm²) | 50.859a² - 16.044a + 8.2071 | Normal-temperature conductivity (b, mS/cm) | Content of lithium salt (%) | Number of cycles at 25°C (capacity fading to 70%) | Number of cycles at 45°C (capacity fading to 70%) | DCR at -10 °C and 70% SOC (mΩ) | Lithium plating growth rate during charge at -10 °C and 0.3 C (%) | Temperature increment during discharge at 6 C (°C) |
|---|---|---|---|---|---|---|---|---|---|
| Embodiments 2 to 6 | 0.28 | 7.70 | 8.4 | 10 | 2750 | 1829 | 135 | 0.25 | 38 |
| Embodiments 2 to 7 | 0.28 | 7.70 | 8.5 | 12.5 | 3135 | 2148 | 134 | 0.18 | 37 |
| Embodiments 2 to 8 | 0.28 | 7.70 | 8.4 | 13.8 | 3154 | 2179 | 134 | 0.15 | 37 |

As can be seen from the embodiments and comparative embodiments in Table 2, when the content of lithium salt in the electrolytic solution is higher (within 16.25%), the concentration polarization is lower, and therefore, the kinetics are higher, the lithium plating growth rate of a thickly coated electrode plate is lower, and the SEI decomposition is slower, the purple specks of the negative electrode are fewer, the cycle performance is higher, the resistance is lower, and the temperature increment during high-current discharge is smaller.

3. Effect of the fluorinated carbonate additive on the battery performance

Table 3 shows the electrolytic solution parameters and battery performance data of Embodiments 3-1 to 3-29.

**Table 3**

| Embodiment and Comparative Embodiment | Single-side positive coating weight (a, g/1540.25 mm²) | 50.859a² - 16.044a + 8.2071 | Normal-temperature conductivity (b, mS/cm) | Dosage of FEC (d%) | Number of cycles at 25 °C (capacity fading to 70%) | Number of cycles at 45 °C (capacity fading to 70%) | DCR at -10 °C and 70% SOC (mΩ) | Lithium plating growth rate during charge at -10 °C and 0.2 C (%) | Capacity retention rate after 90-day storage at 60 °C from 100% SOC (%) |
|---|---|---|---|---|---|---|---|---|---|
| Embodiments 3-1 | 0.2 | 7.032 | 7.8 | 0 | 3580 | 2431 | 124 | 0.18 | 80 |
| Embodiments 3-2 | 0.28 | 7.702 | 7.8 | 0 | 3135 | 2148 | 134 | 0.21 | 77 |
| Embodiments 3-3 | 0.32 | 8.280 | 8.5 | 0 | 2909 | 2056 | 153 | 0.24 | 73 |
| Embodiments 3-4 | 0.34 | 8.631 | 9 | 0 | 2737 | 1859 | 152 | 0.26 | 71 |
| Embodiments 3-5 | 0.4 | 9.926 | 10.7 | 0 | 2201 | 1968 | 163 | 0.32 | 65 |
| Embodiments 3-6 | 0.5 | 12.89 | 13.2 | 0 | 2079 | 1219 | 172 | 0.36 | 58 |
| Embodiments 3-7 | 0.34 | 8.631 | 9 | 0.1 | 2965 | 1959 | 150 | 0.21 | 79 |
| Embodiments 3-8 | 0.4 | 9.926 | 10.7 | 0.4 | 2881 | 1946 | 161 | 0.25 | 80 |
| Embodiments 3-9 | 0.5 | 12.89 | 13.2 | 0.9 | 2874 | 1903 | 165 | 0.29 | 82 |
| Embodiments 3-10 | 0.2 | 7.032 | 7.8 | 0.1 | 3713 | 2501 | 122 | 0.15 | 81 |
| Embodiments 3-11 | 0.2 | 7.032 | 7.8 | 0.5 | 4066 | 2805 | 120 | 0.06 | 85 |
| Embodiments 3-12 | 0.2 | 7.032 | 7.8 | 1 | 4345 | 2999 | 119 | 0.05 | 87 |
| Embodiments 3-13 | 0.2 | 7.032 | 7.8 | 2 | 4480 | 3001 | 119 | 0.16 | 89 |

| Embodiment and Comparative Embodiment | Single-side positive coating weight (a, g/ 1540.25 mm²) | $50.859a^2 - 16.044a + 8.2071$ | Normal-temperature conductivity (b, mS/cm) | Dosage of FEC (d%) | Number of cycles at 25 °C (capacity fading to 70%) | Number of cycles at 45 °C (capacity fading to 70%) | DCR at -10 °C and 70% SOC (mΩ) | Lithium plating growth rate during charge at -10 °C and 0.2 C (%) | Capacity retention rate after 90-day storage at 60 °C from 100% SOC (%) |
|---|---|---|---|---|---|---|---|---|---|
| Embodiments 3-14 | 0.28 | 7.702 | 7.8 | 0.1 | 3693 | 2469 | 132 | 0.18 | 79 |
| Embodiments 3-15 | 0.28 | 7.702 | 7.8 | 0.5 | 3880 | 2629 | 129 | 0.14 | 82 |
| Embodiments 3-16 | 0.28 | 7.702 | 7.8 | 1 | 4235 | 2848 | 127 | 0.1 | 84 |
| Embodiments 3-17 | 0.28 | 7.702 | 7.8 | 2 | 4324 | 2939 | 127 | 0.13 | 86 |
| Embodiments 3-18 | 0.34 | 8.631 | 9 | 0.2 | 3265 | 2159 | 148 | 0.19 | 81 |
| Embodiments 3 to 19 | 0.34 | 8.631 | 9 | 0.5 | 3678 | 2516 | 146 | 0.15 | 83 |
| Embodiments 3 to 20 | 0.34 | 8.631 | 9 | 1 | 4195 | 2813 | 144 | 0.13 | 85 |
| Embodiments 3 to 21 | 0.34 | 8.631 | 9 | 2 | 4298 | 2901 | 143 | 0.16 | 85 |
| Embodiments 3 to 22 | 0.4 | 9.926 | 10.7 | 0.5 | 3101 | 2076 | 159 | 0.22 | 82 |
| Embodiments 3 to 23 | 0.4 | 9.926 | 10.7 | 1 | 3489 | 2357 | 157 | 0.16 | 84 |
| Embodiments 3 to 24 | 0.4 | 9.926 | 10.7 | 2 | 3924 | 2663 | 155 | 0.18 | 85 |
| Embodiments 3 to 25 | 0.4 | 9.926 | 10.7 | 3 | 4211 | 2875 | 155 | 0.23 | 85 |
| Embodiments 3 to 26 | 0.5 | 12.89 | 13.2 | 1 | 3074 | 1989 | 162 | 0.18 | 84 |

(continued)

| Embodiment and Comparative Embodiment | Single-side positive coating weight (a, g/ 1540.25 mm²) | 50.859a² - 16.044a + 8.2071 | Normal-temperature conductivity (b, mS/cm) | Dosage of FEC (d%) | Number of cycles at 25 °C (capacity fading to 70%) | Number of cycles at 45 °C (capacity fading to 70%) | DCR at -10 °C and 70% SOC (mΩ) | Lithium plating growth rate during charge at -10 °C and 0.2 C (%) | Capacity retention rate after 90-day storage at 60 °C from 100% SOC (%) |
|---|---|---|---|---|---|---|---|---|---|
| Embodiments 3 to 27 | 0.5 | 12.89 | 13.2 | 2 | 3604 | 2451 | 160 | 0.19 | 86 |
| Embodiments 3 to 28 | 0.5 | 12.89 | 13.2 | 3 | 3968 | 2608 | 158 | 0.2 | 86 |
| Embodiments 3 to 29 | 0.5 | 12.89 | 13.2 | 4 | 4157 | 2843 | 158 | 0.2 | 86 |

As can be seen from the embodiments and comparative embodiments in Table 3, for a thickly coated electrode plate, when the content of FEC is increased appropriately, the cycle performance is higher, the resistance is lower, and the temperature increment during high-current discharge is smaller. A main reason is that, when the content of FEC is increased, a stable low-resistance solid electrolyte interface (SEI) film is formed on the negative electrode, the lithium plating growth rate is lower, the SEI decomposition is lower, and the purple specks on the negative electrode are fewer.

4. Effect of the organic solvent with at most 5 carbon atoms and a boiling point of at most 120 °C on the battery performance

Table 4 shows the electrolytic solution parameters and battery performance data of Embodiments 4-1 to 4-29 and Comparative Embodiments 4-1 to 4-4.

**Table 4**

| | Single-side positive coating weight (a, g/1540.25 mm2) | 50.859a2 - 16.044a + 8.2071 | Normal-temperature conductivity (b, mS/cm) | EC | PC | EMC | DMC | EA | EP | MA | DME | Number of cycles at 25 °C (capacity fading to 70%) | Number of cycles at 45 °C (capacity fading to 70%) | DCR at -10 °C and 70% SOC (mΩ) | Lithium plating growth rate during 1C CC charge after 200 cycles at normal temperature (%) | Temperature increment during discharge at 6 C (°C) | 25 °C 0.5 C round-trip energy efficiency (RTE, %) |
|---|---|---|---|---|---|---|---|---|---|---|---|---|---|---|---|---|---|
| Embodiments 4 to 1 | 0.2 | 7.03 | 7.8 | 30 | 5 | 20 | 0 | 0 | 0 | 0 | 0 | 3580 | 2431 | 124 | 0.26 | 38 | 95.8 |
| Comparative Embodiments 4 to 1 | 0.3 | 7.97 | 7.8 | 30 | 5 | 20 | 0 | 0 | 0 | 0 | 0 | 3135 | 2148 | 134 | 0.37 | 41 | 95.4 |
| Comparative Embodiments 4 to 2 | 0.3 | 7.97 | 7.8 | 30 | 5 | 20 | 0 | 0 | 0 | 0 | 0 | 2737 | 1859 | 152 | 0.65 | 46 | 95.1 |
| Comparative Embodiments 4 to 3 | 0.4 | 9.93 | 7.8 | 30 | 5 | 20 | 0 | 0 | 0 | 0 | 0 | 2201 | 1968 | 163 | 0.74 | 53 | 94.7 |
| Comparative Embodiment 4-4 | 0.5 | 12.90 | 7.8 | 30 | 5 | 20 | 0 | 0 | 0 | 0 | 0 | 1079 | 719 | 172 | 0.91 | 66 | 94.1 |
| Embodiments 4 to 2 | 0.2 | 7.03 | 8.5 | 30 | 5 | 40 | 0 | 0 | 0 | 0 | 0 | 3721 | 2517 | 120 | 0.18 | 36 | 96 |
| Embodiments 4 to 3 | 0.2 | 7.03 | 9 | 30 | 5 | 65 | 0 | 0 | 0 | 0 | 0 | 3798 | 2554 | 117 | 0.11 | 34 | 96.2 |
| Embodiment 4-4 | 0.2 | 7.03 | 10.7 | 30 | 5 | 0 | 40 | 0 | 0 | 0 | 0 | 3766 | 2550 | 117 | 0.06 | 33 | 96.6 |
| Embodiments 4 to 5 | 0.2 | 7.03 | 12.8 | 30 | 5 | 0 | 0 | 40 | 0 | 0 | 0 | 3845 | 2499 | 114 | 0.03 | 28 | 96.9 |
| Embodiments 4 to 6 | 0.2 | 7.03 | 10.2 | 30 | 5 | 0 | 0 | 0 | 40 | 0 | 0 | 3737 | 2478 | 115 | 0.07 | 30 | 96.2 |

(continued)

| | Single-side positive coating weight (a, g/1540.25 mm2) | 50.859a2 - 16.044a + 8.2071 | Normal-temperature conductivity (b, mS/cm) | EC | PC | EMC | DMC | EA | EP | MA | DME | Number of cycles at 25 °C (capacity fading to 70%) | Number of cycles at 45 °C (capacity fading to 70%) | DCR at -10 °C and 70% SOC (mΩ) | Lithium plating growth rate during 1C CC charge after 200 cycles at normal temperature (%) | Temperature increment during discharge at 6 C (°C) | 25 °C 0.5 C round-trip energy efficiency (RTE, %) |
|---|---|---|---|---|---|---|---|---|---|---|---|---|---|---|---|---|---|
| Embodiments 4 to 7 | 0.2 | 7.03 | 15.3 | 30 | 5 | 0 | 0 | 0 | 0 | 40 | 0 | 3912 | 2317 | 112 | 0.02 | 25 | 97.1 |
| Embodiments 4 to 8 | 0.2 | 7.03 | 15.4 | 30 | 5 | 0 | 0 | 0 | 0 | 0 | 40 | 4080 | 2401 | 112 | 0.02 | 25 | 97.3 |
| Embodiments 4 to 9 | 0.3 | 7.97 | 8.5 | 30 | 5 | 40 | 0 | 0 | 0 | 0 | 0 | 3185 | 2169 | 133 | 0.21 | 41 | 95.6 |
| Embodiments 4 to 10 | 0.3 | 7.97 | 9 | 30 | 5 | 65 | 0 | 0 | 0 | 0 | 0 | 3250 | 2179 | 132 | 0.15 | 40 | 95.8 |
| Embodiments 4 to 11 | 0.3 | 7.97 | 10.7 | 30 | 5 | 0 | 40 | 0 | 0 | 0 | 0 | 3275 | 2195 | 131 | 0.1 | 39 | 96 |
| Embodiments 4 to 12 | 0.3 | 7.97 | 12.8 | 30 | 5 | 0 | 0 | 40 | 0 | 0 | 0 | 3412 | 2289 | 129 | 0.06 | 36 | 96.2 |
| Embodiments 4 to 13 | 0.3 | 7.97 | 10.2 | 30 | 5 | 0 | 0 | 0 | 40 | 0 | 0 | 3367 | 2277 | 130 | 0.1 | 38 | 95.9 |
| Embodiments 4 to 14 | 0.3 | 7.97 | 15.3 | 30 | 5 | 0 | 0 | 0 | 0 | 40 | 0 | 3559 | 2298 | 128 | 0.05 | 36 | 96.4 |
| Embodiments 4 to 15 | 0.3 | 7.97 | 15.4 | 30 | 5 | 0 | 0 | 0 | 0 | 0 | 40 | 3624 | 2309 | 127 | 0.05 | 36 | 96.8 |
| Embodiments 4 to 16 | 0.3 | 7.97 | 8.5 | 30 | 5 | 40 | 0 | 0 | 0 | 0 | 0 | 2884 | 1951 | 150 | 0.35 | 45 | 95.3 |
| Embodiments 4 to 17 | 0.3 | 7.97 | 9 | 30 | 5 | 65 | 0 | 0 | 0 | 0 | 0 | 2989 | 2001 | 149 | 0.26 | 44 | 95.5 |
| Embodiments 4 to 18 | 0.3 | 7.97 | 10.7 | 30 | 5 | 0 | 40 | 0 | 0 | 0 | 0 | 3125 | 2085 | 147 | 0.21 | 43 | 95.7 |

(continued)

| Embodiments | Single-side positive coating weight (a, g/1540.25 mm2) | 50.859a2-16.0044a+8.2071 | Normal-temperature conductivity (b, mS/cm) | EC | PC | EMC | DMC | EA | EP | MA | DME | Number of cycles at 25 °C (capacity fading to 70%) | Number of cycles at 45 °C (capacity fading to 70%) | DCR at -10 °C and 70% SOC (mΩ) | Lithium plating growth rate during 1C CC charge after 200 cycles at normal temperature (%) | Temperature increment during discharge at 6 C (°C) | 25°C 0.5C round-trip energy efficiency (RTE, %) |
|---|---|---|---|---|---|---|---|---|---|---|---|---|---|---|---|---|---|
| 4 to 19 | 0.3 | 7.97 | 12.8 | 30 | 5 | 0 | 0 | 40 | 0 | 0 | 0 | 3288 | 2207 | 145 | 0.15 | 41 | 96.1 |
| 4 to 20 | 0.3 | 7.97 | 10.2 | 30 | 5 | 0 | 0 | 0 | 40 | 0 | 0 | 3199 | 2141 | 146 | 0.2 | 42 | 95.8 |
| 4 to 21 | 0.3 | 7.97 | 15.3 | 30 | 5 | 0 | 0 | 0 | 0 | 40 | 0 | 3352 | 2189 | 143 | 0.1 | 38 | 96.3 |
| 4 to 22 | 0.3 | 7.97 | 15.4 | 30 | 5 | 0 | 0 | 0 | 0 | 0 | 40 | 3369 | 2231 | 142 | 0.1 | 38 | 96.5 |
| 4 to 23 | 0.4 | 9.93 | 10.7 | 30 | 5 | 0 | 40 | 0 | 0 | 0 | 0 | 2758 | 1850 | 159 | 0.17 | 50 | 95.4 |
| 4 to 24 | 0.4 | 9.93 | 12.8 | 30 | 5 | 0 | 0 | 40 | 0 | 0 | 0 | 3079 | 1998 | 154 | 0.1 | 47 | 95.8 |
| 4 to 25 | 0.4 | 9.93 | 10.2 | 30 | 5 | 0 | 0 | 0 | 40 | 0 | 0 | 2807 | 1803 | 157 | 0.16 | 48 | 95.5 |
| 4 to 26 | 0.4 | 9.93 | 15.3 | 30 | 5 | 0 | 0 | 0 | 0 | 40 | 0 | 3227 | 2021 | 150 | 0.12 | 45 | 96 |
| 4 to 27 | 0.4 | 9.93 | 15.4 | 30 | 5 | 0 | 0 | 0 | 0 | 0 | 40 | 3296 | 2135 | 149 | 0.11 | 45 | 96.2 |
| 4 to 28 | 0.5 | 12.90 | 13.0 | 30 | 5 | 0 | 0 | 50 | 0 | 0 | 0 | 2589 | 1738 | 158 | 0.15 | 58 | 95.5 |
| 4 to 29 | 0.5 | 12.90 | 13.2 | 30 | 5 | 0 | 0 | 0 | 0 | 20 | 0 | 1920 | 1291 | 164 | 0.19 | 62 | 95.3 |

As can be seen from the embodiments and comparative embodiments in Table 4, with the increase of the coating weight, the battery cell deteriorates significantly in terms of cycle performance, charging performance, discharge temperature increment, and round-trip energy efficiency. After a high-kinetics solvent (added at a weight percent of over 30 wt%), the thickly coated battery cell is improved significantly in terms of cycle performance, charging performance, and discharge temperature increment. A main reason is that, when the coating weight is high, it is extremely difficult for the electrolytic solution to infiltrate, the polarization during the charge and discharge is extremely high, and the initial SEI film is very prone to be formed insufficiently. Lithium keeps depositing on the surface of the negative electrode during cycles, resulting in loss of active lithium and rapid fading of capacity. After the high-kinetics solvent such as EMC, DMC, EA, MA, EP, and DME is introduced, the electrode can be thoroughly infiltrated in a short time. A homogeneous SEI film is formed on the negative electrode, and the polarization is reduced. The lithium plating is suppressed, the decomposition of the SEI is slowed down, the purple specks on the negative electrode are fewer, the cycle performance is higher, the resistance is lower, and the temperature increment during high-current discharge is significantly smaller.

5. Effect of the S=O functional group-containing compound additive on the battery performance

Table 5 shows the electrolytic solution parameters and battery performance data of Embodiments 4-22 to 5-11 and Comparative Embodiments 5-1.

**Table 5**

| | Positive coating weight (a g/ 1540.25 mm$^2$) | Normal-temperature conductivity (b, mS/cm) | Organic solvent | | | | S=O functional group-containing compound | | | Battery performance | | | | | | |
|---|---|---|---|---|---|---|---|---|---|---|---|---|---|---|---|---|
| | | | EMC | DMC | EA | EP | DTD | PS | MMDS | Number of cycles at 25 °C (capacity fading to 65% of initial capacity) | Number of cycles at 45 °C (capacity fading to 65% of initial capacity) | Residual capacity retention rate after 90-day storage at 60 °C from 100% SOC (%) | Reversible capacity retention rate after 90-day storage at 60 °C from 100% SOC (%) | Thickness expansion rate after 90-day storage at 60 °C and 0% SOC (%) | DCR at -10 °C and 70% SOC (mΩ) | Overcharge performance at 1C and 6.5 V (number passing the test every 10 battery cells) |
| Comparative Embodiments 5 to 1 | 0.4 | 7.8 | 20 | 0 | 0 | 0 | 0 | 0 | 0 | 2201 | 1968 | 83.7 | 84 | 53 | 163 | 7 |
| Embodiments 5 to 1 | 0.4 | 10.7 | 0 | 40 | 0 | 0 | 0 | 0 | 0 | 2758 | 1850 | 82.5 | 83 | 72 | 159 | 6 |
| Embodiments 5 to 2 | 0.4 | 12.8 | 0 | 0 | 40 | 0 | 0 | 0 | 0 | 3079 | 1998 | 81.7 | 82 | 106 | 154 | 4 |
| Embodiments 5 to 3 | 0.4 | 10.2 | 0 | 0 | 0 | 40 | 0 | 0 | 0 | 2807 | 1803 | 82.3 | 83 | 74 | 157 | 6 |
| Embodiments 5 to 4 | 0.4 | 10.7 | 0 | 40 | 0 | 0 | 0.1 | 0 | 0 | 2373 | 1999 | 83.9 | 84 | 46 | 162 | 8 |
| Embodiment 5-5 | 0.4 | 10.7 | 0 | 40 | 0 | 0 | 0.5 | 0 | 0 | 3101 | 2682 | 90.3 | 91 | 13 | 160 | 10 |
| Embodiments 5 to 6 | 0.4 | 10.7 | 0 | 40 | 0 | 0 | 1 | 0 | 0 | 4534 | 3127 | 91.2 | 92 | 7 | 160 | 10 |

(continued)

| EMC | DMC | EA | EP | DID | PS | MMDS | Number of cycles at 25 °C (capacity fading to 65% of initial capacity) | Number of cycles at 45 °C (capacity fading to 65% of initial capacity) | Residual capacity retention rate after 90-day storage at 60 °C from 100% SOC (%) | Reversible capacity retention rate after 90-day storage at 60 °C from 100%SOC (%) | Thickness expansion rate after 90-day storage at 60 °C and 0% SOC (%) | DCR at -10 °C and 70% SOC (mΩ) | Overcharge performance at 1 C and 6.5 V (number passing the test every 10 battery cells) | | | |
|---|---|---|---|---|---|---|---|---|---|---|---|---|---|---|---|---|
| Embodiments 5 to 7 | 0.4 | 10.7 | 0 | 40 | 0 | 0 | 2 | 0 | 0 | 4537 | 3136 | 91.2 | 92 | 7 | 161 | 10 |
| Embodiments 5 to 8 | 0.4 | 12.8 | 0 | 0 | 40 | 0 | 0.5 | 0 | 0 | 4768 | 3493 | 90.4 | 91 | 20 | 152 | 10 |
| Embodiments 5 to 9 | 0.4 | 10.2 | 0 | 0 | 0 | 40 | 0.5 | 0 | 0 | 4448 | 2879 | 90.5 | 91 | 15 | 155 | 10 |
| Embodiments 5 to 10 | 0.4 | 10.7 | 0 | 40 | 0 | 0 | 0 | 0.5 | 0 | 4286 | 2951 | 90 | 91 | 12 | 157 | 10 |
| Embodiments 5 to 11 | 0.4 | 10.7 | 0 | 40 | 0 | 0 | 0 | 0 | 0.5 | 4391 | 3083 | 91 | 92 | 13 | 156 | 10 |

As can be seen from the embodiments and comparative embodiments in Table 5, after a thickly coated electrode plate is doped with the S=O functional group-containing compound, the performance indicators are improved significantly in terms of cycle performance, after-storage capacity retention rate, storage gassing suppression, and safety performance. A main reason is that, when the electrode plate is thickly coated, the SEI decomposes quickly, and is very prone to cause a plunge of the cycle capacity and shorten the lifespan of the battery cell. The S=O functional group-containing compound can form a protection film that is highly stable thermally and chemically on the surfaces of positive electrode and the negative electrode, suppress side reactions between electrodes and the electrolytic solution, and achieve high cycle stability and high storage stability (suppress gassing and increase the capacity retention rate), high kinetic performance, and high safety performance. The sulfonate compound coupled with the high-kinetics solvent can significantly suppress the storage gassing caused by the high-kinetics solvent, and achieve a relatively long service life and relatively high safety performance on the basis of maintaining high kinetics.

Although illustrative embodiments have been demonstrated and described above, a person skilled in the art understands that the above embodiments are not to be construed as a limitation on this application, and changes, replacements, and modifications may be made to the embodiments without departing from the spirit, principles, and scope of this application.

**Claims**

1. An electrochemical device, comprising a positive electrode, a negative electrode, a separator, and an electrolytic solution, wherein the electrolytic solution comprises a lithium salt, an organic solvent, and an additive, a normal-temperature conductivity of the electrolytic solution is b mS/cm, a single-side positive coating weight is a g/1540.25 mm$^2$, and a relationship between a and b satisfies: $b \geq 50.859a^2 - 16.044a + 8.2071$, wherein $0.2 \leq a \leq 0.55$.

2. The electrochemical device according to claim 1, wherein b is less than or equal to 20.

3. The electrochemical device according to claim 1, wherein, based on a total mass of the electrolytic solution, a mass percent of the lithium salt is c%, and a relationship between c and a satisfies:
   when

$$0.2 \leq a \leq 0.4, c \geq 1707a^3 - 1393.9a^2 + 391.4a - 30.28;$$

   and
   when

$$0.4 < a \leq 0.55, 12.5 \leq c \leq 16.25.$$

4. The electrochemical device according to claim 1, wherein, based on a total mass of the electrolytic solution, a mass percent of the lithium salt is c%, wherein $6.25 \leq c \leq 18.75$.

5. The electrochemical device according to claim 1, wherein, the additive comprises fluorinated carbonate, and, based on a total mass of the electrolytic solution, a mass percent of the fluorinated carbonate is d%, and a relationship between d and a satisfies: $10a - 3 \leq d \leq 4$, and $0.3 \leq a \leq 0.55$.

6. The electrochemical device according to claim 1, wherein the organic solvent comprises an organic solvent with at most 5 carbon atoms, and, based on a total mass of the electrolytic solution, a mass percent of the organic solvent with at most 5 carbon atoms is greater than or equal to 30%.

7. The electrochemical device according to claim 6, wherein an organic solvent with at most 5 carbon atoms and with a boiling point of at most 120 °C comprises at least one of dimethyl carbonate, ethyl methyl carbonate, methyl acetate, ethyl acetate, propyl acetate, methyl propionate, ethyl propionate, methyl formate, ethyl formate, propyl formate, tetrahydrofuran, 1,3-dioxolane, or ethylene glycol dimethyl ether.

8. The electrochemical device according to claim 1, wherein the electrolytic solution further comprises ethylene carbonate.

9. The electrochemical device according to claim 1, wherein the additive comprises an S=O functional group-containing compound, the S=O functional group-containing compound is at least one selected from 1,3-propane sultone, ethylene sulfate, methylene methyl disulfonate, propene sultone, 4-methyl ethylene sulfate, or 1,4-butyl sultone.

10. The electrochemical device according to claim 9, wherein, based on a total mass of the electrolytic solution, a mass percent of the S=O functional group-containing compound is 0.01% to 3%.

11. The electrochemical device according to claim 1, wherein the electrolytic solution satisfies at least one of conditions (I) to (III): (I) a mass ratio between an organic solvent with at most 5 carbon atoms and a boiling point of at most 120 °C and ethylene carbonate is 0.75 to 3; (II) a mass ratio between ethylene carbonate and lithium hexafluorophosphate is 0.031 to 0.343; and (III) a mass ratio between an organic solvent with at most 5 carbon atoms and a boiling point of at most 120 °C and lithium hexafluorophosphate is 1.8 to 7.0.

12. The electrochemical device according to claim 1, wherein the lithium salt is at least one selected from lithium hexafluorophosphate, lithium hexafluoroarsenate, lithium perchlorate, lithium bisfluorosulfonimide, or lithium bis(trifluoromethanesulfonyl)imide; and
the additive comprises a lithium-containing additive, and the lithium-containing additive is at least one selected from $LiPO_2F_2$, LiDFOB, LiBOB, $LiBF_4$, $B_4Li_2O_7$, $Li_3BO_3$ or $CF_3LiO_3S$.

13. The electrochemical device according to claim 1, wherein the positive electrode satisfies at least one of conditions (A) to (D):

    (A) the positive electrode comprises a positive active material layer, and a compacted density of the positive active material layer is 1.7 $g/cm^3$ to 2.5 $g/cm^3$;
    (B) the positive electrode comprises a positive active material, and the positive active material comprises at least one of lithium iron phosphate or lithium manganese iron phosphate;
    (C) the positive electrode comprises a positive active material, and a particle diameter $D_{50}$ of the positive active material is 0.5 $\mu m$ to 2.0 $\mu m$; and
    (D) the positive electrode comprises a positive active material, and a BET specific surface area of the positive active material is 8 $m^2/g$ to 25 $m^2/g$.

14. The electrochemical device according to claim 1, wherein the negative electrode comprises a graphite material, and the graphite material satisfies at least one of conditions (E) to (H):

    (E) a BET specific surface area of the graphite material is 0.9 $m^2/g$ to 1.7 $m^2/g$;
    (F) $D_{v50}$ of the graphite material is 12 $\mu m$ to 20 $\mu m$;
    (G) a Raman Id/Ig ratio of the graphite material is 0.25 to 0.5; and
    (H) the graphite material comprises one or more of Al, Fe, Cu, Zn, Cr, Si, Na, P, or S.

15. An electronic device, comprising the electrochemical device according to any one of claims 1 to 14.

## INTERNATIONAL SEARCH REPORT

| | International application No. |
|---|---|
| | **PCT/CN2021/131471** |

**A. CLASSIFICATION OF SUBJECT MATTER**

H01M 4/131(2010.01)i;　H01M 10/056(2010.01)i

According to International Patent Classification (IPC) or to both national classification and IPC

**B. FIELDS SEARCHED**

Minimum documentation searched (classification system followed by classification symbols)

H01M4/-;H01M10/-

Documentation searched other than minimum documentation to the extent that such documents are included in the fields searched

Electronic data base consulted during the international search (name of data base and, where practicable, search terms used)

CNPAT, CNKI, WPI, EPODOC: 宁德, 徐春瑞, 周邵云, 电化学, 正极, 阳极, 负极, 阴极, 电解液, 电解溶液, 电解质溶液, 关系, 电导率, 导电率, 重量, 质量, electrochemistry, positive electrode, anode, negativ+, cathode+, electrolyte+, weight

**C. DOCUMENTS CONSIDERED TO BE RELEVANT**

| Category* | Citation of document, with indication, where appropriate, of the relevant passages | Relevant to claim No. |
|---|---|---|
| A | CN 112909318 A (NINGDE CONTEMPORARY AMPEREX TECHNOLOGY CO., LTD.) 04 June 2021 (2021-06-04) <br> description, paragraphs [0004]-[0041] and [0046]-[0112] | 1-15 |
| A | CN 102255105 A (DONGGUAN AMPEREX TECHNOLOGY LIMITED et al.) 23 November 2011 (2011-11-23) <br> entire document | 1-15 |
| A | CN 102938328 A (OCEAN'S KING LIGHTING SCIENCE & TECHNOLOGY CO., LTD. et al.) 20 February 2013 (2013-02-20) <br> entire document | 1-15 |
| A | CN 212907803 U (DONGGUAN JUHE NEW ENERGY CO., LTD.) 06 April 2021 (2021-04-06) <br> entire document | 1-15 |
| A | CN 110265626 A (NINGDE CONTEMPORARY AMPEREX TECHNOLOGY CO., LTD.) 20 September 2019 (2019-09-20) <br> entire document | 1-15 |
| A | JP 2017063013 A (TEIJIN LTD.) 30 March 2017 (2017-03-30) <br> entire document | 1-15 |

☑ Further documents are listed in the continuation of Box C. ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **10 May 2022** | **26 May 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/131471** |

**C.    DOCUMENTS CONSIDERED TO BE RELEVANT**

| Category* | Citation of document, with indication, where appropriate, of the relevant passages | Relevant to claim No. |
|---|---|---|
| A | JP 2017103163 A (TOYOTA MOTOR CORP.) 08 June 2017 (2017-06-08)<br>entire document | 1-15 |

Form PCT/ISA/210 (second sheet) (January 2015)

INTERNATIONAL SEARCH REPORT
Information on patent family members

International application No.

**PCT/CN2021/131471**

| Patent document cited in search report | | | Publication date (day/month/year) | Patent family member(s) | | | Publication date (day/month/year) |
|---|---|---|---|---|---|---|---|
| CN | 112909318 | A | 04 June 2021 | WO | 2020043153 | A1 | 05 March 2020 |
| | | | | CN | 110875491 | A | 10 March 2020 |
| | | | | EP | 3780179 | A1 | 17 February 2021 |
| | | | | KR | 20210033033 | A | 25 March 2021 |
| | | | | CN | 110875491 | B | 30 March 2021 |
| | | | | US | 2021242498 | A1 | 05 August 2021 |
| | | | | JP | 2021534555 | W | 09 December 2021 |
| CN | 102255105 | A | 23 November 2011 | CN | 102255105 | B | 02 March 2016 |
| CN | 102938328 | A | 20 February 2013 | None | | | |
| CN | 212907803 | U | 06 April 2021 | None | | | |
| CN | 110265626 | A | 20 September 2019 | KR | 20210033032 | A | 25 March 2021 |
| | | | | US | 2021359302 | A1 | 18 November 2021 |
| | | | | US | 2021159495 | A1 | 27 May 2021 |
| | | | | EP | 3780168 | A1 | 17 February 2021 |
| | | | | JP | 2021533553 | A | 02 December 2021 |
| | | | | WO | 2020043151 | A1 | 05 March 2020 |
| | | | | CN | 111969183 | A | 20 November 2020 |
| | | | | CN | 111969183 | B | 29 June 2021 |
| | | | | US | 11121369 | B2 | 14 September 2021 |
| | | | | CN | 110265626 | B | 29 September 2020 |
| JP | 2017063013 | A | 30 March 2017 | JP | 2021144954 | A | 24 September 2021 |
| JP | 2017103163 | A | 08 June 2017 | None | | | |

Form PCT/ISA/210 (patent family annex) (January 2015)